Europäisches Patentamt

European Patent Office

Office européen des brevets

(11) Publication number: **0 067 028**
**A1**

## (12) EUROPEAN PATENT APPLICATION

(21) Application number: **82302810.5**

(22) Date of filing: **01.06.82**

(51) Int. Cl.³: **C 02 F 3/18**

(30) Priority: **02.06.81 AU 9136/81**

(43) Date of publication of application: **15.12.82**
**Bulletin 82/50**

(84) Designated Contracting States: **AT BE CH DE FR GB IT LI LU NL SE**

(71) Applicant: **Wakelin, Russell Richard Ferrers, 24 Church Street, Balmain New South Wales, 2041 (AU)**

(72) Inventor: **Wakelin, Russell Richard Ferrers, 24 Church Street, Balmain New South Wales, 2041 (AU)**

(74) Representative: **JENSEN & SON, 8 Fulwood Place High Holborn, London WC1V 6HG (GB)**

(54) Apparatus to aerate and mix sewage or other fluids containing solids.

(57) A device (10) to aerate and mix sewage including a rotatable housing (11) within which is located a plurality of chambers (17), the housing (11) is rotated so that chambers (17) within the housing (11) pass from a submerged to an unsubmerged position thereby delivering air to below the liquid level while raising the liquid to a position to be delivered to the body of the liquid after passing through the air.

## "APPARATUS TO AERATE AND MIX SEWAGE OR OTHER FLUIDS CONTAINING SOLIDS"

The present invention relates to devices to aerate and mix sewage or other liquids particularly liquids containing solids.

It is a problem of known aeration and mixing devices that they are generally expensive to manufacture and operate and are not completely efficient in aerating sewage. Additionally these known devices, especially air compressors require considerable maintenance.

It is an object of the present invention to ovecome or substantially ameliorate the above disadvantages.

There is disclosed herein an aeration device for liquids comprising a rotatable housing to be rotated about a predetermined horizontal axis so that a portion of the housing is located below the liquid level, a plurality of chambers defined within said housing, each chamber having an opening allowing liquid to enter and leave the chamber as it passes between a submerged and unsubmerged position, and drive means to rotate said housing.

A preferred form of the present invention will now be described by way of example with reference to the accompanying drawings, wherein:

Figure 1 is a schematic side elevation of a sewage aeration and mixing device;

Figure 2 is an end elevation of the device of Figure 1;

Figure 3 is a schematic side elevation of a further device to mix and aerate sewage;

Figure 4 is a schematic end elevation of the device of Figure 3;

Figure 5 is a schematic side elevation of a further device to aerate and mix sewage;

Figure 6 is an end elevation of the device of Figure 5;

Figures 7, 8 and 9 are schematic perspective views of portions of the aerating and mixing devices of Figures 1, 3 and 5.

- 2 -

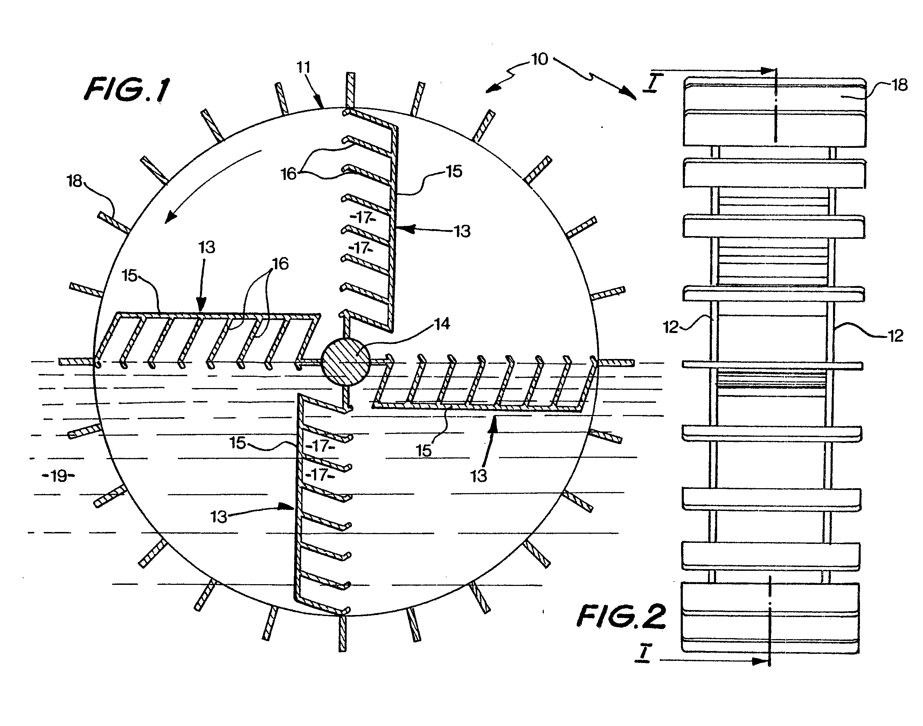

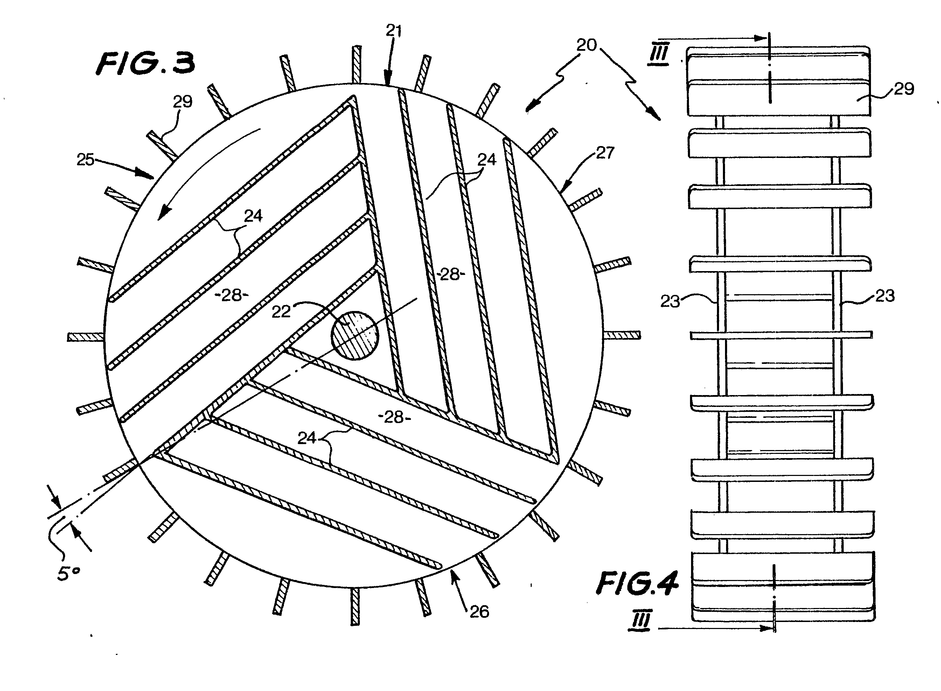

In Figures 1 and 2 there is schematically depicted a device 10 to aerate and mix sewage. The device 10 consists generally of a rotatable housing 11 including two disc members 12 between which is located radially extending arms 13. The arms 13 extend radially outwardly from a central shaft 14 to which the disc members 12 and arms 13 are fixed so as to be rotatable thereby about the longitudinal axis of the shaft 14. Each arm 13 includes a base 15 from which extends a plurality of fins 16 so as to, in combination with the base 15 and discs 12, define a plurality of chambers 17. Located along the periphery of the housing 11 are a plurality of paddles 18 which aid in mixing the sewage.

In operation of the device 10, the housing and therefore arms 13 are rotated by the shaft 14 in an anticlockwise direction (relative to Figure 1). As the arms 13 enter and leave the liquid 19, air is delivered to below the liquid level by an arm 13 entering the liquid 19 since air would be trapped within the chamber 17. Additionally as one of the arms 13 leaves the liquid 19, a portion of the liquid is retained in the chamber 17 and is allowed to spill therefrom as the arm is raised. Accordingly the device in aerating liquid uses two operations. The first operation is delivery of air to below the liquid level, while the second operation is causing the liquid to spill from the chamber 17 thereby passing through air in returning to the body of the liquid 19.

Turning now to Figures 3 and 4 wherein there is schematically depicted a device 20 to aerate and mix sewage. The device 20 includes a generally circular housing 21 which is fixed to a driven shaft 22. The housing 21 includes two disc members 23 between which is located a plurality of fins 24 arranged in three sets 25, 26 and 27. The fins 24 of each of the sets 25, 26 and 27 lie generally along a cord of a circle defined by the housing 21. Preferably the fins 24 within each set 25, 26 or 27 would be parallel with the radially innermost fin defining an angle of about $5^{\circ}$ with a radius extending from the shaft 22 and intersecting a radially innermost fin 24 at a position on the periphery of the housing 21. The fins 24 and disc members 23 define a plurality of chambers 28 which receive the liquid and air as the device 20 is rotated. The device 20 would be positioned with the liquid level passing through the shaft 22 with the housing 21 being rotated in an anticlockwise direction (relative to Figure 3). As the device 20 is rotated, the chambers 28 would be caused to enter and leave the liquid thereby delivering air to below the liquid surface while lifting the liquid above the liquid level and causing the liquid to spill from within the chambers 28 thereby passing through air in returning to the body of the liquid. Additionally the housing 21 would be provided with a plurality of paddles 29 which aid in mixing the sewage as the housing 21 is rotated.

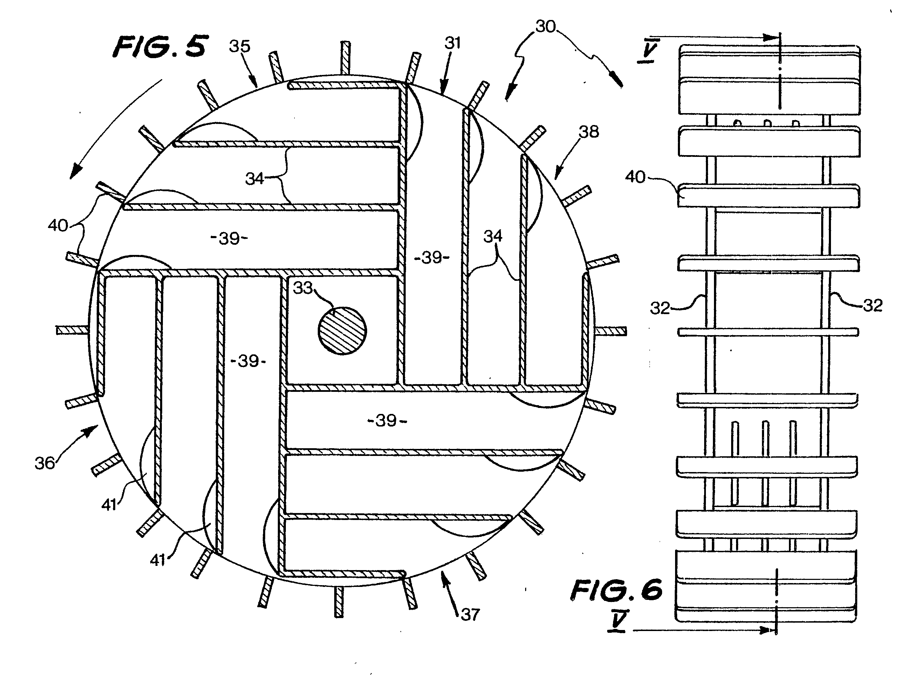

In Figures 5 and 6 there is schematically depicted a device 30 which is adapted to aerate and mix sewage. The device 30 includes a housing 31 having two disc members 32 fixed to a shaft 33. Located within the housing 31 is a plurality of fins 34 which extend along cords of the circle defined by the housing 31. The fins 34 are arranged in four sets 35, 36, 37 and 38 with the fins 34 of each set being arranged generally parallel. Accordingly the fins 34 in combination with the disc members 32 define a plurality of chambers 39 which receive air or liquid to be mixed and aerated.

As discussed previously, as the device 30 is rotated, the chambers 39 are caused to enter and leave the liquid thereby delivering air to below the liquid level while raising the liquid above the liquid level causing the liquid to spill from within the chambers 39 to be passed through air in being returned to the body of the liquid. Additionally the housing 31 would be provided with a plurality of paddles 40 which aid in mixing the sewage.

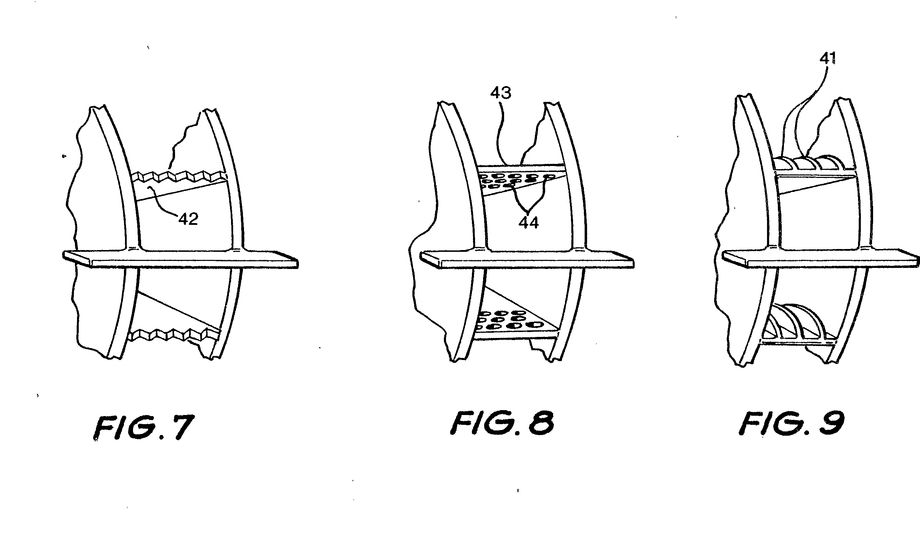

It is desirable to regulate the stream of liquid leaving chambers 39 to enhance the aeration operation. In the embodiment of Figures 5 and 6 there is provided on the radial extremity of each fin a set of projections 41 which are more clearly depicted in Figure 9. These projections

 0067028

separate the main stream of liquid leaving the chambers 39 into three or more substreams.

It is also desirable to regulate the bubble size as air exits from the chambers 17, 28 and 29 as they are passing through the liquid. In Figures 7 and 8 there is schematically depicted means for regulating the abovementioned bubble size. More particularly with reference to Figure 7 each fin 42 would be serrated while with reference to Figure 8 each fin 43 would be provided with a plurality of holes 44 through which the air may pass. Additionally the serrations of Figure 7 and holes of Figure 8 would aid in causing disturbance of the liquid stream leaving the chambers 17, 28 and 29 thereby further enhancing the aeration process.

CLAIMS

1. An aeration device for liquids comprising a rotatable housing to be rotated about a predetermined horizontal axis so that a portion of the housing is located below the liquid level, a plurality of chambers defined within said housing, each chamber having an opening allowing liquid to enter and leave the chamber as it passes between a submerged and unsubmerged position, and drive means to rotate said housing.

2. The device of claim 1 wherein said housing includes a plurality of fins located in said housing so as to be rotated therewith and which extend outwardly with respect to the axis to thereby partly define said chamber.

3. The device of claim 2 wherein said fins extend along cords of a circle having its centre on said axis.

4. The device of claim 2 or 3 wherein each fin is located within a plane which is parallel to a plane containing said axis.

5. The device of claim 3 wherein said housing is circular and said fins generally extend along cords of the circular housing.

6. The device of claim 5 wherein said fins extend in planes parallel to said axis.

7. The device of claim 6 wherein said fins are arranged in groups with the fins within each group being parallel.

8. The device of claim 6 or 7 wherein said fins define an angle of $5^{\circ}$ with a radius extending through the radially outer end of the radially innermost fin.

9. The device of claims 1 to 8 wherein the outer extremity of the fins are provided with deformations.

10. The device of claim 9 wherein the deformations are a plurality of holes extending through the fins.

11. The device of claim 9 wherein the deformations are a plurality of projections extending from the plane of the fins.

12. The device of claim 9 wherein the deformations are serrations formed on the radially outer end of the fins.

13.  A device to aerate and mix sewage substantially as hereinbefore described with reference to the accompanying drawings.

FIG.1

FIG.2

0067028

FIG.3

FIG.4

FIG. 5

FIG. 6

0067028

FIG. 9

FIG. 8

FIG. 7

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | EP-A-0 005 553 (T. STAHLER)<br>* Page 5, line 26 - page 7, line 1; claims 1-3; figures 1,2 *<br>--- | 1 | C 02 F 3/18 |
| A | EP-A-0 017 064 (T. STAHLER)<br>--- | | |
| A | DE-A-2 615 465 (F. ROHRHOFER)<br>--- | | |
| A | DE-A-2 218 165 (O.C.P.S.A.)<br>----- | | |

TECHNICAL FIELDS SEARCHED (Int. Cl. 3)

C 02 F
A 01 K
B 01 F

The present search report has been drawn up for all claims

| Place of search | Date of completion of the search | Examiner |
|---|---|---|
| THE HAGUE | 07-09-1982 | TEPLY J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82